# FASCICULE DE BREVET EUROPEEN

(11) **EP 0 572 313 B1**
(45) Date de publication et mention de la délivrance du brevet: **17.07.1996**
(21) Numéro de dépôt: 93401335.0
(22) Date de dépôt: 25.05.1993
(51) Int. Cl.: B60Q 1/068

(54) **Dispositif de montage du genre rotule, notamment pour réflecteur de projecteur de véhicule automobile**
Kugelbefestigung für Fahrzeugscheinwerferreflektor
Ball fixation for the reflector of a vehicle headlamp

(30) Priorité: 25.05.1992 FR 9206364
(43) Date de publication de la demande: 01.12.1993
(73) Titulaire: VALEO VISION, 93000 Bobigny (FR)
(72) Inventeur: Prelat, Alain, F-75019 Paris (FR); Billot, Gérard, F-93370 Montfermeil (FR); Lequinio, Hervé, F-75015 Paris (FR)
(74) Mandataire: Martin, Jean-Jacques

(56) Documents cités:
- EP-A- 0 313 779
- FR-A- 2 619 539
- GB-A- 2 225 632

## Description

La présente invention a trait aux dispositifs de montage d'une partie mobile d'un projecteur, tel qu'un réflecteur, sur une partie relativement fixe en vue de permettre le réglage de la partie mobile.

Classiquement, une telle pièce mobile présente une pluralité de cavités sphériques (typiquement trois) destinées à recevoir des têtes sphériques complémentaires prévues à l'extrémité de tiges filetées ou analogues. L'entraînement en rotation d'une tige induit un déplacement axial de la tête et donc un pivotement de la pièce mobile, notamment en vue du réglage du faisceau lumineux émis en site ou en azimut.

De façon classique également, lors du montage, la tête est engagée à force ou "cloquée" dans sa cavité, les parois de cette dernière présentant l'élasticité requise pour permettre cet engagement et ensuite assurer le maintien de la tête pour que les mouvements de cette dernière soient effectivement transmis à la pièce mobile.

Il est en outre connu que la cavité soit dé inie par un élément intermédiaire ou capsule rapporté sur la pièce mobile et fixé sur elle par clipsage à l'aide de pattes flexibles ou analogues assurant un accrochage mutuel.

Les documents FR-A-2 351 350 et GB-A-2 225 632 enseignent des constructions de ce type, comme décrit dans les préambules des revendications 1 et 12.

Ces constructions connues présentent toutefois un certain nombre d'inconvénients. En premier lieu, l'assemblage par clipsage de la capsule sur la pièce mobile telle qu'un réflecteur présente le plus souvent un certain jeu ou débattement, qui induit des variations indésirables dans l'orientation effective du faisceau. En outre, un tel jeu peut également exister entre la tête sphérique et sa cavité. Au surplus, la flexibilité du matériau de la capsule, nécessaire pour permettre le cloquage précité, est telle qu'il existe un risque important de séparation de la tête et de la capsule lorsque ces sollicitations trop importantes sont exercées sur ces éléments, notamment lors de l'arrivée de la pièce mobile au bout de sa course autorisée.

Le document EP-A-0 356 750 décrit un dispositif à rotule destiné à éviter ce problème, et dans lequel des pattes flexibles anti-retour sont prévues pour assurer le maintien de la tête sphérique au fond de son siège.

Cette solution connue diminue effectivement le risque de séparation, mais étant donné que ces pattes anti-retour sont normalement en contact avec la sphère, et participent donc à la définition du siège pour ladite sphère, tout jeu ou tolérance de fabrication entre ces pattes et le fond du siège induit à son tour un jeu dans le positionnement de la sphère, ce qui est indésirable pour les raisons indiquées plus haut.

La présente invention vise à pallier ces inconvénients de la technique antérieure. Elle propose à cet effet un dispositif tel que défini dans la revendication 1.

L'invention concerne également un élément intermédiaire tel que défini dans la revendication 12.

Des aspects préférés de l'invention sont définis dans les sous-revendications.

La présente invention sera mieux comprise à la lecture de la description détaillée suivante d'un mode de réalisation préférée de celle-ci, donnée à titre d'exemple et faite en référence aux dessins annexés, sur lesquels :
la figure 1 est une vue en coupe verticale axiale selon le plan I-I de la figure 3, d'un ensemble de tête, capsule et monture de réflecteur selon l'invention,
la figure 2 est une vue en coupe horizontale axiale selon le plan II-II de la figure 3,
la figure 3 est une vue en bout selon la direction III de la figure 1,
la figure 4 est une vue selon la direction IV de la figure 1, et
les figures 5a à 5c illustrent schématiquement trois variantes de réalisation de la présente invention.

En référence aux figures, on a représenté une tige de réglage 10 destinée à être déplacée suivant la direction de son axe par exemple pour faire varier l'orientation d'un réflecteur de véhicule. La tige 10 comprend une partie 11 filetée extérieurement, apte à coopérer par exemple avec un taraudage prévu dans un boîtier du projecteur, une tête généralement sphérique 12 prévue à l'extrémité libre de la partie 11, et une partie de manoeuvre (non représentée) prévue à l'autre extrémité de la tige 10 pour l'entraîner en rotation aux fins de réglage.

Une monture 30, venue par exemple de moulage avec un réflecteur sur la face arrière de ce dernier, permet la fixation sur ledit réflecteur d'une pièce intermédiaire ou capsule 20, réalisée de préférence par moulage d'un seul tenant, ayant pour fonction essentielle de définir pour la tête 12 une cavité sphérique solidaire du réflecteur.

La monture 30 comporte à cet effet un corps 31 dans lequel est ménagé un logement 32 fermé à une première extrémité latérale et ouvert en 32a à une seconde extrémité latérale opposée. Le logement 32 s'étend de préférence latéralement selon une direction générale essentiellement transversale à l'axe de la tige 10 et présente une hauteur et une largeur bien déterminées. Le logement 32 est apte à recevoir avec un jeu extrêmement réduit, comme on va le voir plus loin, un corps de la capsule 20.

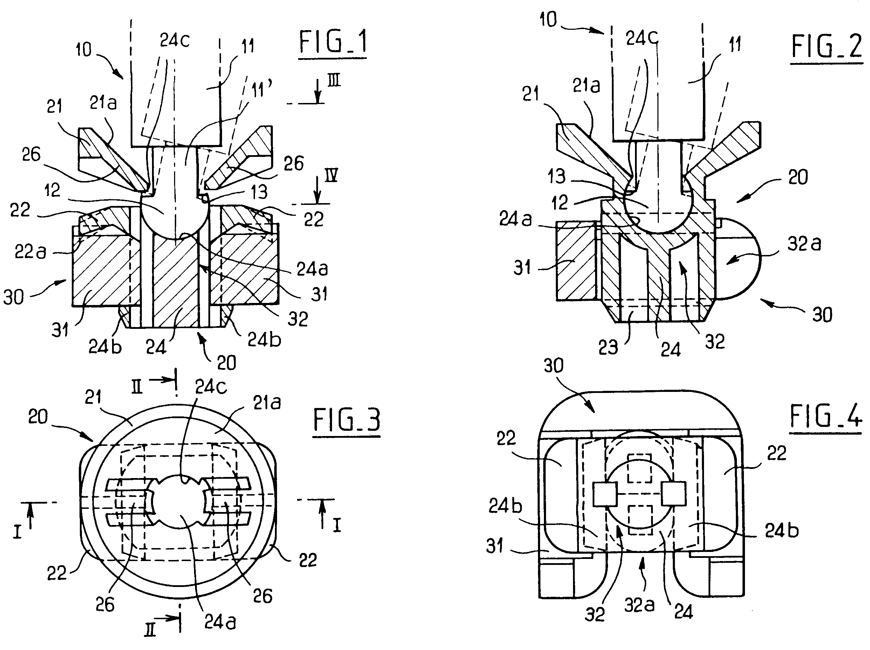

Le corps 24 de la capsule 20 présente une largeur égale ou très légèrement inférieure à celle du logement 32. Il définit centralement une cavité sphérique 24a pour la tête 12 de la tige 10. Le corps 24 définit en outre, dans sa région opposée à la cavité 24a (figures 1 et 2), deux dents latérales essentiellement rigides 24b sous forme d'élargissements vers l'extérieur, destinées à venir en prise sur la surface du corps 31 bordant le logement 32 et opposée à la tige 10.

A partir du corps 24, essentiellement au niveau de sa cavité sphérique 24a, s'étendent latéralement deux ailes coudées 22 destinées à se déformer élastiquement lors de la mise en place du corps 24 dans le logement 32, afin d'assurer un montage de type à embrèvement, sans jeu, de la monture 30 et de la capsule 20. Plus précisément, la position de repos des ailes 22 est illustrée sur la figure 1 en tiretés. L'épaisseur du corps 31 est choisie de telle sorte que, lorsque la capsule et la monture sont assemblées, en faisant glisser le corps 24 dans le logement 32 par l'entrée 32a de ce dernier, les ailes 22 sont écartées élastiquement de leur position, vers le haut sur la figure 1, par la surface du corps 31 de la monture tournée vers la tige 10. Les ailes 22 exercent dès lors en permanence, au niveau de leur arête 22a, une force de rappel sur ladite surface du corps 31, pour assurer une immobilisation ferme de la monture et de la capsule suivant la direction de l'axe de la tige 10.

On observera ici que le montage transversal de la capsule 20 sur la monture 30 pourra être avantageusement utilisé avec tout type de dispositif de montage à rotule, présentant ou non les particularités exposées plus bas.

Selon un autre aspect de l'invention, la capsule 20 comporte, autour d'une ouverture 24c débouchant dans la cavité sphérique 24a, une partie en forme de cône ou de corolle 21 (figures 1, 2 et 3). Cette partie 21 a pour objet d'assurer, par sa surface interne 21a, un guidage de la tête sphérique 12 jusque dans l'alignement de l'ouverture 24c lors du montage du réflecteur sur une pluralité (le plus souvent trois) de têtes sphériques 12 par l'intermédiaire d'autant de capsules 20. On observe en outre que dans la corolle 21 sont définies deux languettes souples 26, diamétralement opposées, qui définissent entre leurs bords d'extrémité en vis-à-vis une distance qui est inférieure au diamètre de la tête 12 et légèrement supérieure au diamètre d'une partie intermédiaire 11' entre ladite tête 12 et la partie filetée 11. En association avec cette disposition, la tête sphérique 12 comporte, dans la région de sa transition avec la partie intermédiaire 11, un épaulement 13 de forme annulaire s'étendant dans un plan perpendiculaire à l'axe de la tige 10.

Lorsque la tête 12 est insérée dans la cavité correspondante 24a sous l'action d'une sollicitation axiale extérieure, ladite tête franchit les bords en vis-à-vis des languettes 26, qui à cet effet se déforment élastiquement vers l'intérieur de façon momentanée. Dès que l'épaulement 13 a franchi les languettes, celles-ci reprennent leur position de repos (figures 1 et 2). Au cours de ce même mouvement, la tête 12 est cloquée dans la cavité 24a. On observera ici que la cavité 24a est réalisée de manière à assurer ce cloquage par elle-même. Plus précisément, les extrémités des languettes 26 en position de repos ne sont pas en contact avec l'épaulement 13 lorsque la tête est convenablement cloquée dans sa cavité. L'objet essentiel de ces languettes est de s'opposer, comme on va le voir ci-dessous, à une extraction de la tête 12 hors de sa cavité.

Plus précisément, la distance entre les extrémités des languettes 26 et l'épaulement 13 (au repos) est telle que, lorsqu'une traction, tendant à faire sortir la tête 12 de la cavité 24a, est exercée sur la tige 10, l'épaulement 13 arrive en butée contre les régions terminales des languettes 26 alors que la tête 12 n'a pas encore franchi le point de résistance maximale à partir duquel elle n'est plus retenue par les parois de la cavité. On note que les languettes 26 ne peuvent pas se déformer élastiquement vers l'extérieur (vers le haut sur la figure 1) étant donné que l'arc de cercle décrit par leurs bords d'extrémité libre coupe rapidement les bords de la partie intermédiaire 11', qui fait donc obstacle à ce mouvement. Les languettes 26 limitent donc fermement la course d'extraction à une position de la tige et de la tête telle que les parois de la cavité 24a exercent encore un effort ramenant la tête dans celle-ci et jusque dans sa position de consigne.

On réalise ainsi un dispositif dans lequel les languettes 26 permettent d'éviter un décloquage intempestif de la tête 12 sans que, en situation normale, elles soient en contact avec l'épaulement 13, et sans qu'elles participent au maintien de la tête. De la sorte, la tige 10 peut voir son inclinaison varier dans certaines limites, comme illustré en tiretés sur les figures 1 et 2, sans que l'épaulement 13 y fasse obstacle.

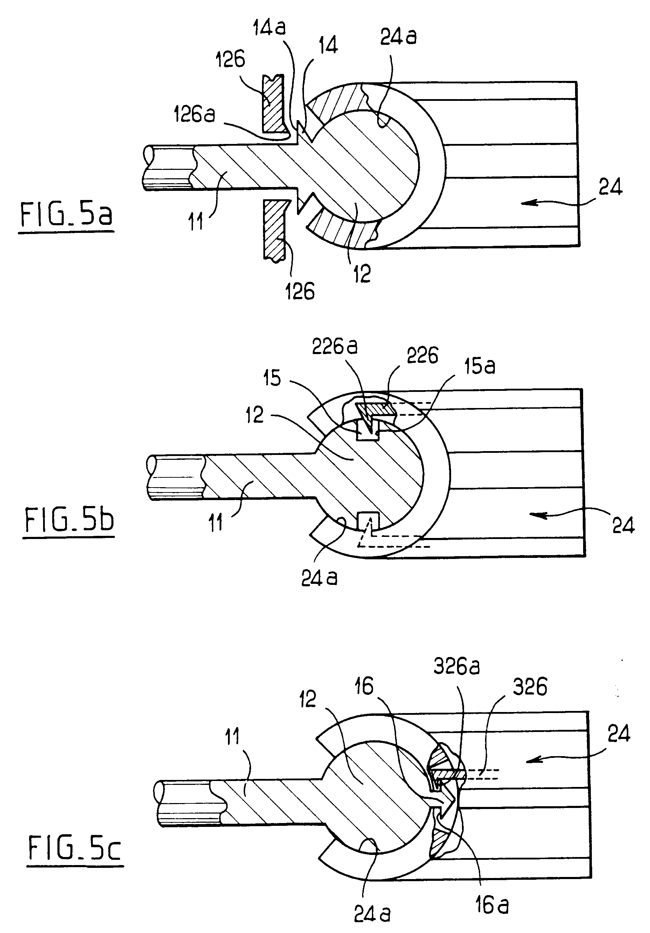

Des variantes de réalisation de l'invention sont illustrées sur les figures 5a à 5c. Des éléments identiques ou similaires à ceux des figures précédentes y sont désignés par les mêmes signes de référence.

Sur la figure 5a, la tige 11 porte dans sa région de transition avec la tête 12 une collerette 14 de section généralement triangulaire, dont la face 14a tournée vers la tige est généralement plane et perpendiculaire à l'axe de la tige.

Le corps 24 définissant la cavité sphérique 24a porte, au voisinage de l'ouverture de la cavité, deux languettes opposées 126 dirigées généralement l'une vers l'autre et portant chacune un prolongement triangulaire 126a dirigé vers la surface 14a précitée.

Les deux languettes 126 définissent entre elles un espace libre plus large que le diamètre de la tige 11, afin d'autoriser les débattements angulaires de celle-ci.

Au repos, les extrémités des deux prolongements 126a sont situées à une certaine distance de la surface 14a. Là encore, les débattements angulaires de la tige 11 sont autorisés.

Lorsqu'une traction (vers la gauche sur la figure) est exercée sur la tige 11, la tête 12 commence à sortir de sa cavité 24a, jusqu'à ce que la surface 14a vienne en contact ave les prolongements 126a des languettes. Celles-ci, d'une manière analogue au cas des figures 1-4, font obstacle à un mouvement supplémentaire de la tige 11 et de la tête 12 vers la gauche alors que les parois de la cavité 24a exercent encore un effort qui, dès que la sollicitation en traction a diminué ou disparu, ramène la tête 12 dans sa position de consigne.

En référence maintenant à la figure 5b, une gorge circonférentielle 15 est prévue dans la tête 12 et s'étend dans un plan perpendiculaire à l'axe de la tige 11. Cette gorge est délimitée, du côté de l'extrémité libre de la tête (à droite sur la figure), par une surface plane annulaire. Deux languettes 226 s'étendent respectivement dans deux régions diamétralement opposées de la cavité 24a et comportent chacune une dent 226a qui comporte une surface droite d'arrêt et qui fait saillie dans ladite cavité et s'engage dans la gorge 15.

Au repos, la surface d'arrêt de chaque dent 226a est espacée de la surface 15a de la gorge, si bien que ces dents n'entravent pas les variations d'inclinaison de la tige 11 portant la tête 12.

Lorsqu'une traction est exercée sur la tige 11, les dents 226a viennent s'opposer au mouvement de la surface 15a de la gorge pour limiter le mouvement d'extraction à une position telle que les parois de la cavité 24a, lorsque la sollicitation en traction a diminué ou disparu, ramènent la tête 12 dans sa position de consigne dans la cavité.

On notera que la face biseautée des dents 226 du côté de l'ouverture de la cavité 24a permet initialement l'engagement à force de la tête 12 dans la cavité 24a en provoquant l'effacement des languettes 226 vers l'extérieur.

En référence à la figure 5c, on observe que la tête 12 comporte à son extrémité libre un téton saillant 16 qui définit une face extérieure conique et une face intérieure 16a généralement plane et perpendiculaire à l'axe de la tige 11. Le fond de la cavité 24a présente un renfoncement dans lequel le téton 16 peut pénétrer lorsque le cloquage de la tête 12 dans son logement est réalisé. Au moins une languette flexible 326 (de préférence deux languettes) fait saillie dans le renfoncement et présente une dent terminale 326a destinée à coopérer par un bord d'arrêt avec la surface 16a du téton.

Au repos, comme illustré, un espace existe entre le bord d'arrêt de la dent 326a et la surface d'arrêt 16a, si bien que le tige et la tête peuvent adopter des variations d'inclinaison sans obstacle.
lorsqu'une traction est exercée sur la tige 11 vers la gauche, le bord d'arrêt et la surface d'arrêt précités viennent en appui l'un contre l'autre, pour limiter la translation de la tête 12 à une position telle que, dès que la traction diminue ou disparaît, les parois de la cavité 24a ramènent la tête dans sa position de consigne.

Bien entendu, la présente invention n'est nullement limitée à la forme de réalisation décrite ci-dessus et représentée sur les dessins, mais l'homme de l'art saura y apporter toute variante ou modification restant dans le cadre des revendications.

## Revendications

1. Dispositif de montage d'une partie mobile d'un projecteur de véhicule automobile sur une partie relativement fixe, du type comprenant une tête généralement sphérique (12), reliée à une première des parties par l'intermédiaire d'une tige (11, 11'), et une cavité essentiellement complémentaire (24a), solidaire de la seconde partie, ladite tête étant introduite à force dans la cavité par une ouverture (24c) débouchant dans celle-ci, au moins une languette souple (26; 126; 226; 326) étant prévue au voisinage de ladite cavité et étant apte à se déformer élastiquement pour permettre la mise en place de la tête dans celle-ci, et, après cette mise en place, à faire obstacle à une extraction de la tête hors de la cavité, caractérisé en ce que ladite cavité (24a) définit à elle seule une position stable pour la tête (12), position dans laquelle ladite languette souple au moins prévue n'est pas en contact avec ladite tête.

2. Dispositif selon la revendication 1, caractérisé en ce que la distance entre la languette souple (26; 126; 226; 326) au moins prévue et la tête (12) dans la position stable de ladite tête est choisie de telle sorte que, lorsque la tête s'est déplacée sous l'effet d'une traction pour faire entrer en jeu ladite languette, les parois de ladite cavité exercent encore un effort tendant à ramener la tête dans sa position stable.

3. Dispositif selon la revendication 1 ou 2, caractérisé en ce que ladite tête (12) présente un épaulement généralement annulaire (13; 14a; 15a; 16a) apte à coopérer avec ladite languette (26; 126; 226; 326) au moins prévue pour faire obstacle à l'extraction.

4. Dispositif selon la revendication 3, caractérisé en ce que ledit épaulement (13) est prévu dans une région de transition entre la tête et la tige.

5. Dispositif selon la revendication 4, caractérisé en ce que ledit épaulement (14a) est prévu sur une collerette (14) en saillie à partir de ladite tige (10).

6. Dispositif selon la revendication 3, caractérisé en ce que ledit épaulement (15a) est prévu dans une gorge circonférentielle (15) ménagée dans la tête (12) et en ce que la languette souple au moins prévue (226) comporte un prolongement (226a) en saillie dans ladite gorge lorsque la tête est en place dans la cavité.

7. Dispositif selon la revendication 3, caractérisé en ce que ledit épaulement (16a) est prévu sur un téton (16) ménagé du côté de la tête opposé à la tige, en ce que la cavité présente en son fond un renfoncement destiné à recevoir ledit téton, et en ce que la languette souple au moins prévue (326) fait saillie dans ledit renfoncement et comporte une dent (326a) apte à coopérer avec ledit épaulement.

8. Dispositif selon l'une des revendications 1 à 7, caractérisé en ce qu'il est prévu deux languettes souples (26) diamétralement opposées.

9. Dispositif selon l'une des revendications 1 à 5, caractérisé en ce que la languette souple au moins prévue (26) est définie par une région découpée d'une partie évasée de guidage (21) entourant ladite ouverture (24c) de la cavité.

10. Dispositif selon l'une des revendications 1 à 9, caractérisé en ce que ladite cavité et ladite ouverture débouchant dans celle-ci sont définies par un élément intermédiaire (20) rapporté sur la seconde partie, en ce que ledit élément intermédiaire est engagé dans un logement (32) prévu sur ladite pièce selon une direction essentiellement transversale à la direction de la tige, et en ce qu'il est prévu sur ledit élément intermédiaire au moins une patte souple (22) assurant une solidarisation sans jeu entre ledit élément intermédiaire et ladite pièce.

11. Dispositif selon la revendication 10, caractérisé en ce qu'il est prévu deux pattes souples (22) dans une première région d'un corps (24) dudit élément intermédiaire, apte à être reçu dans ledit logement (32), lesdites pattes étant aptes à être déformées élastiquement par des premières surfaces respectives de ladite seconde partie situées de part et d'autre dudit logement, et en ce que ledit corps comporte, dans une deuxième région opposée à la première par rapport au logement, deux dents essentiellement rigides (24b) coopérant avec des deuxièmes surfaces respectives situées de part et d'autre dudit logement et opposées auxdites premières surfaces respectives.

12. Elément intermédiaire (20) pour le montage d'une partie mobile d'un projecteur de véhicule automobile sur une partie relativement fixe, une tête généralement sphérique étant reliée à une première des parties par l'intermédiaire d'une tige, et une cavité essentiellement complémentaire étant solidaire de la seconde partie, ladite tête étant introduite à force dans la cavité par une ouverture débouchant dans celle-ci, caractérisé en ce qu'il comprend un corps (24) définissant ladite cavité (24a) et apte à être engagé dans un logement de ladite seconde partie, au moins une patte souple (22) faisant saillie à partir du corps et apte à coopérer élastiquement avec une surface avoisinant ledit logement pour éviter les jeux entre ledit élément intermédiaire et ladite seconde partie, ainsi qu'au moins une languette souple (26) reliée audit corps et s'étendant au voisinage de ladite ouverture (24c) et capable de se déformer élastiquement en direction de la cavité pour permettre la mise en place de la tête dans celle-ci tout en faisant obstacle à une extraction de la tête hors de la cavité.

13. Elément intermédiaire selon la revendication 12, caracetérisé en ce que ladite patte souple (22) au moins prévue s'étend dans une direction essentiellement transversale à une direction de mise en place de ladite tête.

## Claims

1. Device for mounting a mobile part of an automobile vehicle headlight on a relatively fixed part, of the type comprising a generally spherical head (12) joined to a first part by means of a rod (11, 11') and a substantially complementary cavity (24a) fastened to the second part, said head being force fitted into the cavity through an opening (24c) into the latter, at least one flexible tongue (26; 126; 226; 326) being provided in the vicinity of said cavity and adapted to deform elastically to enable insertion of the head therein and, after such insertion, to impede extraction of the head from the cavity, characterised in that said cavity (24a) defines of its own a stable position for the head (12), in which position said at least one flexible tongue is not in contact with said head.

2. Device according to claim 1 characterised in that the distance between the at least one flexible tongue (26; 126; 226; 326) and the head (12) in the stable position of said head is such that when the head is moved in response to the application of a traction load such that said at least one tongue comes into play the walls of said cavity still exert a force tending to return the head into its stable position.

3. Device according to claim 1 or claim 2 characterised in that said head (12) has a generally annular shoulder (13; 14a; 15a; 16a) adapted to cooperate with said at least one tongue (26; 126; 226; 326) to impede extraction.

4. Device according to claim 3 characterised in that said shoulder (13) is in a transition region between the head and the rod.

5. Device according to claim 4 characterised in that said shoulder (14a) is on a flange (14) projecting from said rod (10).

6. Device according to claim 3 characterised in that said shoulder (15a) is in a circumferential groove (15) in the head (12), and in that the at least one flexible tongue (226) comprises a projection (226a) disposed in said groove when the head is in place in the cavity.

7. Device according to claim 3 characterised in that said shoulder (16a) is on a nipple (16) on the side of the head opposite the rod, in that the cavity has at the back a recess adapted to receive said nipple and in that the at least one flexible tongue (326) projects into said recess and comprises a tooth (326a) adapted to cooperate with said shoulder.

8. Device according to any one of claims 1 to 7 characterised in that it comprises two diametrally opposed flexible tongues (26).

9. Device according to any one of claims 1 to 5 characterised in that the at least one flexible tongue (26) is defined by a cut-out region of a flared guide part (21) surrounding said opening (24c) of the cavity.

10. Device according to any one of claims 1 to 9 characterised in that said cavity and said opening are defined by an intermediate member (20) attached to the second part, in that said intermediate member is engaged in a housing (32) provided on said part in a direction essentially transverse to the direction of the rod and in that at least one flexible lug (22) is provided on said intermediate member to fasten said intermediate member and said part together without play.

11. Device according to claim 10 characterised in that it comprises two flexible lugs (22) in a first region of a body (24) of said intermediate member adapted to be received in said housing (32), said lugs being adapted to be deformed elastically by respective first surfaces of said second part on either side of said housing and in that said body comprises in a second region opposite the first region relative to the housing two substantially rigid teeth (24b) cooperating with respective second surfaces on either side of said housing and opposite respective first surfaces.

12. Intermediate member (20) for mounting a mobile part of an automobile vehicle headlight on a relatively fixed part wherein a generally spherical head is joined to a first part by means of a rod and a substantially complementary cavity is joined to the second part, said head being force fitted into the cavity through an opening in the latter, characterised in that it comprises a body (24) defining said cavity (24a) and adapted to be engaged in a housing of said second part, at least one flexible lug (22) projecting from the body and adapted to cooperate elastically with a surface adjoining said housing to eliminate play between said intermediate member and said second part, and at least one flexible tongue (26) joined to said body, extending to the vicinity of said opening (24c) and being adapted to deform elastically towards the cavity to enable fitting of the head into the latter and to impede extraction of the head from the cavity.

13. Intermediate member according to claim 12 characterised in that said at least one flexible lug (22) extends in a direction substantially transverse to a direction of insertion of said head.

## Patentansprüche

1. Montagevorrichtung zur Anbringung eines beweglichen Teils eines Kraftfahrzeugscheinwerfers an einem relativ feststehenden Teil, in der Ausführung mit einem allgemein kugelförmigen Kopf (12), der mit einem ersten der Teile durch eine Stange (11, 11') verbunden ist, und einer in etwa formschlüssigen Vertiefung (24a), die fest mit dem zweiten Teil verbunden ist, wobei der besagte Kopf in die Vertiefung durch eine in diese führende Öffnung (24c) eingedrückt wird, wobei wenigstens eine biegsame Zunge (26; 126; 226; 326) in der Nähe der besagten Vertiefung vorgesehen ist und sich elastisch verformen kann, um das Einsetzen des Kopfes darin zu ermöglichen und nach diesem Einsetzen einem Heraustreten des Kopfes aus der Vertiefung entgegenzuwirken, **dadurch gekennzeichnet,** daß die besagte Vertiefung (24a) alleine eine stabile Position für den Kopf (12) definiert, in der sich die besagte biegsame Zunge, die wenigstens vorgesehen ist, nicht mit dem besagten Kopf in Berührung befindet.

2. Vorrichtung nach Anspruch 1 , **dadurch gekennzeichnet,** daß der Abstand zwischen der biegsamen Zunge (26; 126; 226; 326), die wenigstens vorgesehen ist, und dem Kopf (12) in der stabilen Position des besagten Kopfes so gewählt ist, daß, wenn sich der Kopf unter der Einwirkung einer Zugkraft verschiebt, um die besagte Zunge eingreifen zu lassen, die Wände der besagten Vertiefung noch eine Kraft ausüben, um den Kopf in seine stabile Position zurückzuführen.

3. Vorrichtung nach Anspruch 1 oder 2 , **dadurch gekennzeichnet,** daß der besagte Kopf (12) eine allgemein ringförmige Schulter (13; 14a; 15a; 16a) aufweist, die mit der besagten Zunge (26; 126; 226; 326), die wenigstens vorgesehen ist, zusammenwirken kann, um dem Austreten entgegenzuwirken.

4. Vorrichtung nach Anspruch 3 , **dadurch gekennzeichnet,** daß die besagte Schulter (3) in einem Übergangsbereich zwischen dem Kopf und der Stange vorgesehen ist.

5. Vorrichtung nach Anspruch 4 , **dadurch gekennzeichnet,** daß die besagte Schulter (14a) an einem Kragen (14) vorgesehen ist, der von der besagten Stange (10) aus vorsteht.

6. Vorrichtung nach Anspruch 3 , **dadurch gekennzeichnet,** daß die besagte Schulter (15a) in einer in den Kopf (12) eingearbeiteten Umfangsauskehlung (15) vorgesehen ist und daß die biegsame Zunge (226), die wenigstens vorgesehen ist, eine Verlängerung (226a) umfaßt, die in die besagte Auskehlung hineinragt, wenn der Kopf in die Vertiefung eingesetzt ist.

7. Vorrichtung nach Anspruch 3 , **dadurch gekennzeichnet,** daß die besagte Schulter (16a) an einem Zapfen (16) vorgesehen ist, der auf der der Stange gegenüberliegenden Seite des Kopfes angeordnet ist, daß die Vertiefung an ihrem Boden eine Verstärkung aufweist, die für die Aufnahme des besagten Zapfens bestimmt ist, und daß die biegsame Zunge (326), die wenigstens vorgesehen ist, in die besagte Verstärkung hinreinragt und einen Zahn (326a) umfaßt, um mit der besagten Schulter zusammenzuwirken.

8. Vorrichtung nach einem der Ansprüche 1 bis 7, **dadurch gekennzeichnet,** daß zwei diametral gegenüberliegende biegsame Zungen (26) vorgesehen sind.

9. Vorrichtung nach einem der Ansprüche 1 bis 5, **dadurch gekennzeichnet,** daß die biegsame Zunge (26), die wenigstens vorgesehen ist, durch einen freistehenden Bereich eines konisch erweiterten Führungsteils (21) gebildet wird, der die besagte Öffnung (24c) der Vertiefung umgibt.

10. Vorrichtung nach einem der Ansprüche 1 bis 9, **dadurch gekennzeichnet,** daß die besagte Vertiefung und die in diese mündende Öffnung durch ein Zwischenelement (20) gebildet werden, das an dem zweiten Teil angesetzt ist, daß das besagte Zwischenelement in eine an dem besagten Teil vorgesehene Aufnahme (32) in einer Richtung eingesetzt wird, die in etwa quer zur Richtung der Stange verläuft, und daß an dem besagten Zwischenelement wenigstens ein biegsamer Ansatz (22) vorgesehen ist, der eine spielfreie feste Verbindung zwischen dem besagten Zwischenelement und dem besagten Teil herbeiführt.

11. Vorrichtung nach Anspruch 10, **dadurch gekennzeichnet,** daß zwei biegsame Ansätze (22) in einem ersten Bereich eines Körpers (24) des besagten Zwischenelements vorgesehen sind, der in die besagte Aufnahme (32) eingesetzt werden kann, wobei die besagten Ansätze jeweils durch beiderseits der besagten Aufnahme angeordnete erste Flächen des besagten zweiten Teils elastisch verformt werden können, und daß der besagte Körper in einem zweiten Bereich, der dem ersten im Verhältnis zur Aufnahme gegenüberliegt, zwei weitgehend starre Zähne (24b) aufweist, die jeweils mit zweiten Flächen zusammenwirken, die beiderseits der besagten Aufnahme angeordnet sind und den besagten jeweiligen ersten Flächen gegenüberliegen.

12. Zwischenelement (20) für die Anbringung eines beweglichen Teils eines Kraftfahrzeugscheinwerfers an einem relativ feststehenden Teil, wobei ein allgemein kegelförmiger Kopf mit einem ersten der Teile durch eine Stange verbunden ist und eine in etwa formschlüssige Vertiefung fest an dem zweiten Teil angebracht ist, wobei der besagte Kopf in die Vertiefung durch eine in diese führende Öffnung eingedrückt wird, **dadurch gekennzeichnet,** daß es einen Körper (24) umfaßt, der die besagte Vertiefung (24a) enthält und in eine Aufnahme des besagten zweiten Teils eingesetzt werden kann, ferner wenigstens einen biegsamen Ansatz (22), der von dem Körper aus vorsteht und elastisch mit einer an die besagte Aufnahme angrenzenden Flächen zusammenwirken kann, um Spiele zwischen dem besagten Zwischenelement und dem besagten zweiten Teil zu verhindern, sowie wenigstens eine biegsame Zunge (26), die mit dem besagten Körper verbunden ist und sich in der Nähe der besagten Öffnung (24c) erstreckt, wobei sie sich in Richtung der Vertiefung elastisch verformen kann, um das Einsetzen des Kopfes darin zu ermöglichen und gleichzeitig einem Austreten des Kopfes aus der Vertiefung entgegenzuwirken.

13. Zwischenelement nach Anspruch 12 , **dadurch gekennzeichnet,** daß sich der besagte biegsame Ansatz (22), der wenigstens vorgesehen ist, in einer Richtung erstreckt, die in etwa quer zur Einsetzrichtung des besagten Kopfes verläuft.
